# NEUE EUROPÄISCHE PATENTSCHRIFT

(11) **EP 0 350 475 B2**
(45) Veröffentlichungstag und Bekanntmachung des Hinweises auf die Entscheidung über den Einspruch: **29.04.1998**
(45) Hinweis auf die Patenterteilung: 03.11.1993
(21) Anmeldenummer: 89890178.0
(22) Anmeldetag: 04.07.1989
(51) Int. Cl.: G01N 17/00, C23F 13/00

(54) **Verfahren und Anordnung zur Bestimmung des Korrosionszustandes eines metallischen, im Erdreich vergrabenen Objektes**
Method and apparatus for determining the state of corrosion of a buried object
Procédé et appareil pour déterminer l'état de corrosion d'un objet métallique enterré

(30) Priorität: 04.07.1988 AT 1724/88
(43) Veröffentlichungstag der Anmeldung: 10.01.1990
(73) Patentinhaber: FLAGA HANDELSGESELLSCHAFT m.b.H., A-2100 Leobendorf bei Korneuburg (AT)
(72) Erfinder: Kragulj, Walter, A-2351 Wiener Neudorf (AT)
(74) Vertreter: Barger, Werner, Dipl.-Ing.

(56) Entgegenhaltungen:
- DE-A- 3 419 612
- FR-A- 2 448 148
- US-A- 4 409 080
- PATENT ABSTRACTS OF JAPAN vol. 9, no. 262 (P-398)(1985) 19 Oktober 85, & JP-A-60 111949
- W.V.Baeckmann, W.Schwenk: Handbuch des kathodischen Korrosionsschutzes, 2. Auflage (1980), Verlag Chemie, Weinheim
- Schriftenreihe für Sicherheit und Wirtschaftlichkeit in der Industrie, Heft 3: Korrosion metallischer Werkstoffe - Ursachenermittlung und Beeinflussungsmöglichkeiten, TüV Rheinland, Köln (März 1972)
- Prüfbericht Nr. 0101/96 der staatlich akkreditierten Prüfanstalt KKS, 2344 Maria Enzersdorf, Österreich
- Prüfbericht Nr. 0102/96 der staatlich akkreditierten Prüfanstalt KKS, 2344 Maria Enzersdorf, Österreich

## Beschreibung

Die Erfindung betrifft ein Verfahren zur Bestimmung des Korrosionszustandes eines metallischen, zumindest teilweise im Erdreich vergrabenen Objektes, wobei das Objekt mit einem Korrosionsschutzüberzug versehen wird und wobei eine metallisch blanke Stelle des Objektes mit einer Opferanode elektrisch leitend verbunden wird und wobei in dieser Leitung zwischen dem Objekt und der Anode ein Amperemeter angeordnet wird. Weiters betrifft die Erfindung eine Anordnung zur Durchführung des Verfahrens.

Es sind, beispielsweise aus der Veröffentlichung: "Technical considerations for the protection of underground or mounded LPG tanks and pipework against corrosion", Mai 1988, der European LPG Association - Association Europeenne des gas de petrol liquefies, im wesentlichen zwei Gruppen von Korrosionsschutzverfahren bekannt: der aktive und der passive Korrosionsschutz.

Beim aktiven Korrosionsschutz versucht man, in die chemischen bzw. elektrochemischen Reaktionen einzugreifen, indem man entweder den Werkstoff oder das korrosive Medium verändert oder indem man auf die Korrosionsreaktion einwirkt, beispielsweise durch Temperaturerniedrigung, anodische oder kathodische Polarisation etc.

Der passive Korrosionsschutz beinhaltet das Ausbilden oder Aufbringen von Oberflächenschutzschichten, die den Werkstoff vom korrosiven Medium trennen.

Beide Verfahren weisen verschiedene Vor- und Nachteile auf. So ist es beim passiven Korrosionsschutz notwendig, den Schutzüberzug fehlerfrei und über die gesamte der Korrosion ausgesetzten Oberfläche aufzubringen und darauf zu achten, daß beim Transport, Zusammenbau und Einbau diese Schutzschichte nicht beschädigt wird. Das Aufbringen der Schutzschichte selbst erfordert eine gründliche Vorbereitung der Oberfläche, was aufwendig und kostspielig ist. Wird der gefährdete Gegenstand im Erdreich eingegraben, besteht ab diesem Zeitpunkt keine kostengünstige Kontrollmöglichkeit des Zustandes der Schutzschichte. Es ist bei einer Kontrolle notwendig, den Gegenstand frei zu legen, was im allgemeinen hohe Kosten verursacht und meistens mit einer vorübergehenden Außerbetriebsetzung des Gegenstandes verbunden ist.

Der aktive Korrosionsschutz wird bei metallischen Gegenständen, die im Erdreich vergraben werden, meist mittels einer Opferanode, beispielsweise aus Magnesium oder mittels einer künstlich aufrechterhaltenen Gleichstromspannung zwischen dem Gegenstand und einer im Erdreich verlegten Anode erzielt. Eine derartige Anlage muß gewartet werden und verbraucht bei größeren Objekten nennenswerte Mengen an Anodenmaterial und/oder Strom. Wird ein Fehler in der Stromversorgung oder die vollständige Zersetzung der Opferanode nicht rechtzeitig bemerkt, ist ein Verlust des Korrosionsschutzes die Folge. Es ist auch bei diesem Verfahren nicht möglich, Angaben über den Zustand des geschützten Objektes oder das Fortschreiten der Korrosion zu machen.

Ein modernes passives Korrosionsschutzverfahren besteht aus dem Aufbringen eines Zweikomponentenkunststoffes (modifiziertes, lösemittelfreies Epoxidharz und ein Härter), der mit hohen Temperaturen (zirka 80 °C) unter einem Druck von zirka 250 bar auf den oberflächenbehandelten (schleifen der Schweißnähte; entfernen von Zunder, Walzhaut und Schweißperlen; sandstrahlen stark gekrümmter Flächen) und vorzugsweise vortemperierten Gegenstand aufgebracht wird. Die empfohlene Schichtdicke liegt bei 1000 Mikrometern im trockenen Zustand.

Aktive Korrosionsschutzverfahren sind aus verschiedenen Veröffentlichungen bekannt:

Die US-PS 4 409 080 betrifft eine Anordnung zur Überwachung der Korrosion von aktiv mittels einer Gleichstromquelle korrosionsgeschützten Gegenständen. Dabei wird, räumlich zwischen der Anode und dem zu übewachenden Gegenstand eine Zielelektrode im Boden vorgesehen, die mit dem Gegenstand elektrisch leitend verbunden ist. In diese Verbindung ist ein Coulometer geschalten, das durch eine chemische Reaktion den fließenden Strom integriert. Aus der Reaktion wird auf die bereits erfolgte Korrosion rückgeschlossen.

Diese Vorrichtung ist extrem sensibel auf Ungleichmäßigkeiten im Boden zwischen der Anode und dem zu schützenden Objekt. Bereits durch das Vergraben der drei Gegenstände (Objekt, Anode, Zielelektrode) werden in den Boden Störungen eingebracht, die die Aussagekraft der Anordnung auf praktisch Null reduzieren.

Dazu kommt, daß ausschließlich über die insgesamt geflossene Strommenge (proportional zur Gesamtmenge abkorrodierten Materials) eine Aussage getroffen werden kann, der tatsächliche Zustand des Objektes kann nicht erschlossen werden.

Die DE-OS 34 19 612 beschreibt eine Vorrichtung, bei der ein passiver Schutz in Form eines Überzuges vorgesehen ist, der durch zusätzlichen aktiven, kathodischen Schutz verstärkt wird.

Der passive "Schutz" allein ist allerdings, im Gegensatz zur Erfindung, nicht in der Lage, das Objekt zu schützen, er dient nur zur "Verringerung" des fließenden Schutzstromes. Zur Feststellung des Korrosionszustandes der Umhüllung ist vorgesehen, den Schutzstrom zu messen und beim Überschreiten einer vorgegebenen Stromstärke über eine vorgegebene Zeit Alarm zu schlagen.

Die Messung der im Vergleich zum fließenden Schutzstrom kleinen Änderungen zufolge der langsam fortschreitenden Korrosion ist meßtechnisch aufwendig und daher unzuverlässig. Die benötigten Geräte sind entsprechend teuer und kompliziert.

Es ist die Aufgabe der Erfindung, ein Verfahren der eingangs erwähnten Art anzugeben, das eine Aussage über den Korrosionsgrad des geschützten Objektes und eine Aussage über die Korrosionsgeschwindigkeit ermöglicht, ohne wesentliche Mehrkosten zu verursachen und das so auch die Korrosionsbekämpfung selbst erleichtert.

Erfindungsgemäß wird dazu ein Verfahren entsprechend dem kennzeichnenden Teil des Anspruches 1 und eine Anordnung entsprechend dem Anspruch 2 vorgeschlagen.

Die Aufbringung des erfindungsgemäß verwendeten Überzuges bringt den Vorteil mit sich, daß der Schutzstrom klein ist, die Opferanode daher um Größenordnungen länger hält, bzw. nur eine schwache Gleichstromspannungsquelle notwendig ist, und insgesamt Kosten gespart werden.

Darüberhinaus erlaubt es die erfindungsgemäße Lösung, daß durch das Einbringen einer Meßstelle, in die Verbindung zwischen Objekt und Oferanode, die den Strom mißt, eine quantitative Aussage über den Korrosionszustand und die Korrosionsgeschwindigkeit des Objektes getroffen werden kann.

Es ist völlig unvorhersehbar und höchst überraschend, daß bei der erfindungsgemäßen elektrischen Anordnung, aber Verwendung von Standardschutzschichten, beispielsweise einer Bitumenschutzschichte gemäß der DE-OS 34 196 612, Korrosionsströme fließen bzw. Korrosionsspannungen herrschen, die keinerlei Zusammenhang mit dem Korrosionszustand des Objektes haben.

Der erfindungsgemäß erzielte Fortschritt läßt sich mit folgendem Vergleich belegen:

Gemäß dem Beispiel, das die DE-OS 34 19 612 gibt, wird ein Rohr mit einem Außendurchmesser von 16 cm und einer Länge von 4 km (somit einer Oberfläche von etwa 2000 m²) geschützt, wobei ein Schutzpotential von 850 mV anliegt und ein Standardschutzstrom von 1 A fließt. Es fließt somit ein Schutzstrom von 500 Mikroampere/m².

Die Erfindung ermöglicht es, eine Schutzspannung von etwa 510 Mikrovolt zu verwenden, wobei die Stromdichte zwischen 10 und 30 Mikroampere/m² liegt.

Die pro m² benötigte Energie fällt somit auf 1,2 % bis 3,6 % der Energie, die gemäß der DE-OS benötigen wird.

Es ist klar ersichtlich, daß ein Ansteigen der Stromstärke zufolge der fortschreitenden Korrosion beim erfindungsgemäßen Verfahren wesentlich größere relative Stromstärkeänderungen zur Folge hat und somit wesentlich leichter und zuverläßiger festgestellt werden kann.

Gemäß der Erfindung ist das Schutzobjekt ein Flüssiggastank, der im Erdreich vergraben wird. Derartige Tanks sind Schweißkonstruktionen aus Stahl und stellen somit elektrisch einen einheitlichen Körper dar.

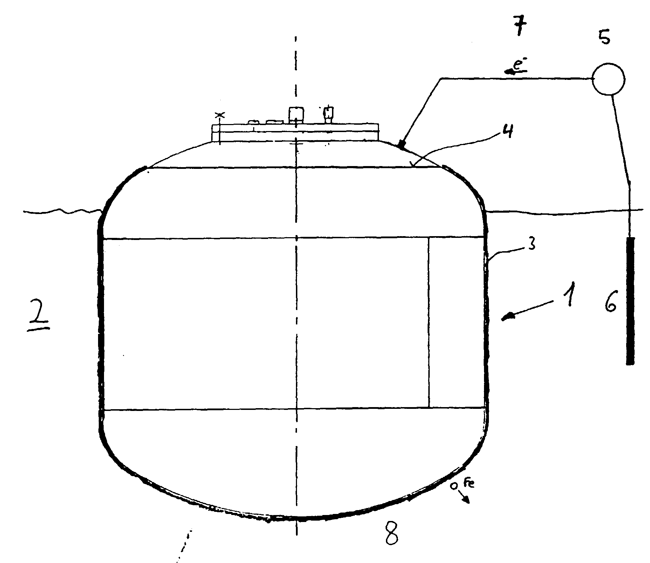

Die Erfindung wird an Hand der Zeichnung näher erläutert.

Dabei ist ein Druckbehälter 1 teilweise im Erdreich 2 eingegraben. Eine dick eingezeichnete Schutzschichte 3 umgibt den Behälter 1 im gesamten unter der Erde befindlichen Bereich bis zu einer vollständig über der Erde liegenden Linie 4. Diese Schutzschichte 3 kann nun durch Aufbringungsfehler, Beschädigungen während des Transportes, der Montage oder des Vergrabens fehlerhaft sein, sodaß blankes Metall des Behälters 1 in Kontakt mit dem Erdreich oder der im Erdreich enthaltenen Feuchtigkeit kommt.

Um auch diese Stellen entsprechend zu schützen, ist ein aktiver Korrosionsschutz in folgender Form vorgesehen. Der Behälter 1 ist elektrisch leitend über eine Meßstelle 5 mit einer Opferanode 6 verbunden. Es bewegen sich daher beim Auftreten von Störstellen in der Schutzschichte 3 Elektronen von der Opferanode 6 über die Leitung zum Behälter 1, wie dies bei 7 angedeutet ist. Diese Elektronen verhindern den bei 3 dargestellten, den Zustand ohne Opferanode zeigenden Austritt von Eisen in das umgebende Erdreich. Statt dessen verlassen Metallatome, vorzugsweise Magnesium, die Opferanode und gelangen ins umgebende Erdreich. Statt des Behälters löst sich die Opferanode auf.

Wenn erfindungsgemäß die oben erwähnte Schutzschichte 3 verwendet wird, ist es durch die Leitung über die Meßstelle 5 fließende Strom ein direktes Maß für die freiliegende Metalloberfläche des Druckbehälters 1 dar. Verschiedene bodenbedingte Unterschiede von Einbausituation zu Einbausituation können mit einem entsprechend ausgeformten Testplättchen in Kenntnis der Erfindung leicht berücksichtigt werden. Darüberhinaus ist es möglich, durch Messen in vorbestimmten Zeitabständen Veränderungen im Korrosionszustand quantitativ zu erfassen, ohne daß die Behälteraußenwand freigelegt werden muß (wodurch üblicherweise weitere Beschädigungen der Schutzschichte 3 entstehen) und den Gesamtzustand zu beurteilen.

Die Meßstelle 5 kann fix am Behälter 1 oder einer passenden Stelle der Leitung vorgesehen sein, oder nur bei Bedarf anläßlich einer Prüfung des Behälters in die Leitung geschaltet werden. Im einfachsten Fall besteht die Meßstelle aus einem Amperemeter, doch ist es möglich, sie mit einer Schnittstelle für eine (tragbare) EDV-Anlage zu versehen, um eine Sofortauswertung der Meßdaten zu ermöglichen.

Das erfindungsgemäße Verfahren liefert somit eine kostengünstige Kontrolle des ansonsten unzugänglichen Gegenstandes.

Es ist auch, möglich, statt der Opferanode eine entsprechende Gleichstromspannung zwischen einer Anode und dem Objekt aufrechtzuerhalten und denselben Effekt zu erzielen. Auch dabei stellt der bei abgeschalteter Gleichstromquelle fließende Strom ein direktes Maß für den Korrosionszustandes des Objektes dar. Eine Kalibrierung kann wiederum mit Hilfe von Testplättchen des verwendeten Behältermaterials und des verwendeten Anodenmaterials vorgenommen und an die jeweilige Bodensituation angepaßt werden.

Übliche Ströme liegen im Bereich von 10 bis 30 Mikroampere je m² zu schützender Oberfläche bei Spannungen von etwa 510 mV.

Zusammenfassend kann gesagt werden, daß die Erfindung ein Korrosionsschutzverfahren eines metallischen, zumindest teilweise in der Erde vergrabenen Gegenstandes betrifft. Das Verfahren besteht darin, das zu schützende Objekt mit einem Überzug aus modifizierten Epoxidharz zu versehen und eine metallisch blanke Stelle des Objektes mit einer Opferanode zu verbinden, um eine Schutzspannung aufrechtzuerhalten.

Zur Bestimmung des Korrosionszustandes des Körpers kann dabei die zwischen dem Körper und der Opferanode fließende Strom gemessen und als Maß für den Korrosionszustand verwendet werden.

## Patentansprüche

1. Verfahren zur Bestimmung des Korrosionszustandes eines metallischen, zumindest teilweise im Erdreich (2) vergrabenen Objektes (1), wobei das Objekt (1) mit einem Korrosionsschutzüberzug (3) versehen wird und wobei eine metallisch blanke Stelle des Objektes über eine Gleichstromspannungsquelle mit einer Anode (6) elektrisch leitend verbunden wird und wobei in dieser Leitung (7) zwischen dem Objekt (1) und der Anode (6) ein Amperemeter (5) angeordnet wird, dadurch gekennzeichnet, daß der Überzug (3) aus modifiziertem Epoxidharz besteht, daß das Objekt (1) ein Flüssiggastank ist, und daß die Anode (6) eine Opferanode ist, wobei die Gleichstromspannungsquelle die Potentialdifferenz zwischen den Materialien des Objektes und der Opferanode ist, wobei der zwischen dem Objekt (1) und der Opferanode (6) fließende Strom gemessen wird, wobei der gemessene Strom ein direktes Maß für die freiliegende Metalloberfläche ist und wobei die Berücksichtigung bodenbedingter Unterschiede von Einbausituation zu Einbausituation und die Kalibrierung des gemessenen Stromes mit Hilfe von Testplättchen erfolgt.

2. Anordnung zur Durchführung des Verfahrens nach Anspruch 1 mit einer Leitung (7), die eine metallisch blanke Stelle eines im Erdreich (2) zumindest teilweise vergrabenen metallischen Objecktes (1), das mit einem korrosionshemmenden Überzug (3) versehen ist, mit einer Anode (6) verbindet, die
eine Opferanode ist, dadurch gekennzeichnet, daß der Überzug (3) aus modifiziertem Epoxidharz besteht, daß das Objekt ein Flüssiggastank ist, daß ein Strommeßgerät (5) in der Leitung (7) vorgesehen ist, wobei der gemessene Strom ein direktes Maß für die freiliegende Metalloberfläche ist, und daß Testplättchen vorgesehen sind, sodaß die Berücksichtigung bodenbedingter Unterschiede von Einbausituation zu Einbausituation und die Kalibrierung des gemessenen Stromes erfolgt.

## Claims

1. A method of determining the state of corrosion of a metal object buried at least partly in the ground (2),
wherein the object (1) is provided with a corrosion-protective coating (3) and wherein a metallically bright location on the object is connected in an electrically conductive manner via a direct-current voltage source to an anode (6) and wherein an ammeter (5) is provided in a lead (7) between the object (1) and the anode (6), characterised in that the coating (3) consists of modified epoxy resin, in that the object (1) is a liquid gas tank, and in that the anode (6) is a sacrificial anode, the direct-current voltage source being the potential difference between the materials of the object and the sacrificial anode, and the current flowing between the object (1) and the sacrificial anode (6) is measured, wherein
the current measured is a direct indication of the condition of the exposed metal surface, and wherein
different ground conditions varying from one installation site to another and the calibration of the measured current are taken into account by means of small test plates.

2. An arrangement for carrying out the method according to Claim 1, with a lead (7) which connects a metallically bright location of a metal object (1), which is buried at least partly in the ground (2) and which is provided with a corrosion-inhibiting coating (3), to an anode (6) which is
a sacrificial anode
characterised in that the coating (3) consists of modified epoxy resin, in that the object is a liquid gas tank, and in that an ammeter (5) is provided in the lead (7), the current measured being a direct indication of the condition of the
exposed metal surface,
and in that test plates are provided so that different ground conditions varying from one installation site to another and the calibration of the measured current are taken into account.

## Revendications

1. Procédé pour déterminer l'état de corrosion d'un objet (1) métallique, au moins partiellement enterré dans le sol (2), dans lequel l'objet (1) est muni d'un revêtement de protection anticorrosive (3), et une zone de l'objet qui est dénudée jusqu'au métal est reliée à une anode (6) par une liaison conductrice de l'électricité, à travers une source de courant continu et dans lequel un ampèremètre (5) est intercalé dans cette liaison (7) entre l'objet (1) et l'anode (6), caractérisé e, ce que le revêtement (3) est composé d'une résine époxyde modifiée, en ce que l'objet (1) est un réservoir de gaz liquéfié, et en ce que l'anode (6) est une anode soluble, la source de tension continue étant alors la différence de potentiel entre les matières de l'objet et de l'anode soluble, auquel cas on mesure le courant circulant entre l'objet (1) et l'anode soluble (6), le courant mesuré étant alors une mesure directe de la surface métallique exposée et
la prise en compte des différences, liées au sol, entre un site d'installation et un autre, et l'étalonnage du courant mesuré s'effectuant à l'aide de plaquettes d'essai.

2. Dispositif pour la mise en oeuvre du procédé selon la revendication 1, comprenant une ligne (7) qui relie une zone dénudée jusqu'au métal d'un objet métallique (1) au moins partiellement enterré dans le sol (2) qui est muni d'un revêtement anticorrosif (3), à une anode (6) qui est une anode soluble, caractérisé en ce que le revêtement (3) est composé d'une résine époxyde modifiée, en ce que l'objet est un réservoir de gaz liquéfié, en ce qu'un appareil (5) de mesure du courant est prévu dans la liaison (7), le courant mesuré étant une mesure directe de la surface métallique exposée, et en ce qu'il est prévu des plaquettes d'essai, de sorte qu'on effectue ainsi la prise en compte des différences, liées au sol, entre un site d'installation et un autre et l'étalonnage du courant mesuré.
